# EUROPEAN PATENT APPLICATION

(11) **EP 4 832 487 A1**
(43) Date of publication of application: **28.10.2026**
(21) Application number: 23961982.8
(22) Date of filing: 22.12.2023
(51) Int. Cl.: H04N 19/176

(54) **ENCODING AND DECODING METHODS, ENCODER AND DECODER, BITSTREAM, AND STORAGE MEDIUM**

(71) Applicant: GUANGDONG OPPO MOBILE TELECOMMUNICATIONS CORP., LTD., Dongguan, Guangdong 523860 (CN)
(72) Inventor: XU, Luhang, Dongguan, Guangdong 523860 (CN)
(74) Representative: RGTH
(86) International application number: PCT/CN2023/141137
(87) International publication number: WO 2025/129660

(57) **Abstract**

Provided are encoding and decoding methods, an encoder and a decoder, a bitstream, and a storage medium. The decoding method comprises: parsing a bitstream, and determining a first sub-block and a second sub-block in a current block; on the basis of prediction information and residual information of the first sub-block, determining reconstruction information of the first sub-block; on the basis of prediction information of the second sub-block, determining initial reconstruction information of the second sub-block, the initial reconstruction information of the second sub-block containing no residual information; and, on the basis of the reconstruction information of the first sub-block and the initial reconstruction information of the second sub-block, determining target reconstruction information of the second sub-block.

## Description

### TECHNICAL FIELD

This application relates to the field of video encoding and decoding technologies, and in particular, to an encoding method, a decoding method, an encoder, a decoder, a bitstream and a storage medium.

### BACKGROUND

A sub-block transform (sub-block transform, SBT) technology divides a current block into a sub-block that includes residual information and a sub-block that does not include residual information, and performs operations such as transformation and quantization on only the sub-block that includes residual information. That is, the SBT technology forces residual information of a specific sub-block to be zero. However, it is not common that there is no residual information at all. Forcing the residual information of the sub-block to be zero may degrade the coding performance to a certain extent.

### SUMMARY

This application provides an encoding method, a decoding method, an encoder, a decoder, a bitstream, and a storage medium. The following describes aspects involved in this application.

According to a first aspect, a decoding method is provided. The decoding method is applied to a decoder, and the decoding method includes: parsing a bitstream to determine a first sub-block and a second sub-block in a current block; determining reconstruction information of the first sub-block according to prediction information and residual information of the first sub-block; determining initial reconstruction information of the second sub-block according to prediction information of the second sub-block, where the initial reconstruction information of the second sub-block does not include residual information; and determining target reconstruction information of the second sub-block according to the reconstruction information of the first sub-block and the initial reconstruction information of the second sub-block.

According to a second aspect, an encoding method is provided. The encoding method is applied to an encoder, and the encoding method includes: determining a first sub-block and a second sub-block in a current block; determining reconstruction information of the first sub-block according to prediction information and residual information of the first sub-block; determining initial reconstruction information of the second sub-block according to prediction information of the second sub-block, where the initial reconstruction information of the second sub-block does not include residual information; and determining target reconstruction information of the second sub-block according to the reconstruction information of the first sub-block and the initial reconstruction information of the second sub-block.

According to a third aspect, a decoder is provided, including: a first determining unit, configured to parse a bitstream to determine a first sub-block and a second sub-block in a current block; a second determining unit, configured to determine reconstruction information of the first sub-block according to prediction information and residual information of the first sub-block; a third determining unit, configured to determine initial reconstruction information of the second sub-block according to prediction information of the second sub-block, where the initial reconstruction information of the second sub-block does not include residual information; and a fourth determining unit, configured to determine target reconstruction information of the second sub-block according to the reconstruction information of the first sub-block and the initial reconstruction information of the second sub-block.

According to a fourth aspect, a decoder is provided, including: a memory, configured to store a computer program; and a processor, configured to execute the method according to the first aspect when running the computer program.

According to a fifth aspect, an encoder is provided, including: a first determining unit, configured to determine a first sub-block and a second sub-block in a current block; a second determining unit, configured to determine reconstruction information of the first sub-block according to prediction information and residual information of the first sub-block; a third determining unit, configured to determine initial reconstruction information of the second sub-block according to prediction information of the second sub-block, where the initial reconstruction information of the second sub-block does not include residual information; and a fourth determining unit, configured to determine target reconstruction information of the second sub-block according to the reconstruction information of the first sub-block and the initial reconstruction information of the second sub-block.

According to a sixth aspect, an encoder is provided, including: a memory, configured to store a computer program; and a processor, configured to execute the method according to the second aspect when running the computer program.

According to a seventh aspect, a computer readable storage medium is provided, where the computer readable storage medium stores a computer program, and the method in the first aspect or the second aspect is implemented when the computer program is executed.

According to an eighth aspect, a computer program product is provided, including a computer program, where the method in the first aspect or the second aspect is implemented when the computer program is executed.

According to a ninth aspect, a non-volatile computer readable storage medium storing a bitstream is provided. The bitstream is generated by using an encoding method of an encoder, or the bitstream is decoded by using a decoding method of a decoder, where the decoding method is the method according to the first aspect, and the encoding method is the method according to the second aspect.

According to a tenth aspect, a bitstream is provided, including a bitstream generated according to the method in the first aspect or a bitstream generated according to the method in the second aspect.

The initial reconstruction information of the second sub-block (not including residual information) is processed according to the reconstruction information of the first sub-block (including the residual information), thereby introducing the residual information into the second sub-block, and improving the coding performance.

### BRIEF DESCRIPTION OF DRAWINGS

FIG. 1 is an example diagram of a structure of a video encoder to which an embodiment of this application is applicable.
FIG. 2 is an example diagram of a structure of a video decoder to which an embodiment of this application is applicable.
FIG. 3A is an example diagram of a sub-block division manner in a sub-block transform mode.
FIG. 3B is another example diagram of a sub-block division manner in a sub-block transform mode.
FIG. 4 is a schematic flowchart of a decoding method according to an embodiment of this application.
FIG. 5 is an example diagram of a shape of a filter according to an embodiment of this application.
FIG. 6 is another example diagram of a shape of a filter according to an embodiment of this application.
FIG. 7 is an example diagram of a padding area used for filtering according to an embodiment of this application.
FIG. 8 is an example diagram of a sliding manner of a filter according to an embodiment of this application.
FIG. 9 is another example diagram of a sliding manner of a filter according to an embodiment of this application.
FIG. 10 is another example diagram of a sliding manner of a filter according to an embodiment of this application.
FIG. 11 is an example diagram of a sub-block division manner according to an embodiment of this application.
FIG. 12 is a schematic flowchart of an encoding method according to an embodiment of this application.
FIG. 13 is a schematic structural diagram of a decoder according to an embodiment of this application.
FIG. 14 is a schematic structural diagram of a decoder according to another embodiment of this application.
FIG. 15 is a schematic structural diagram of an encoder according to an embodiment of this application.
FIG. 16 is a schematic structural diagram of an encoder according to another embodiment of this application.

### DESCRIPTION OF EMBODIMENTS

The following describes the technical solutions in this application with reference to the accompanying drawings.

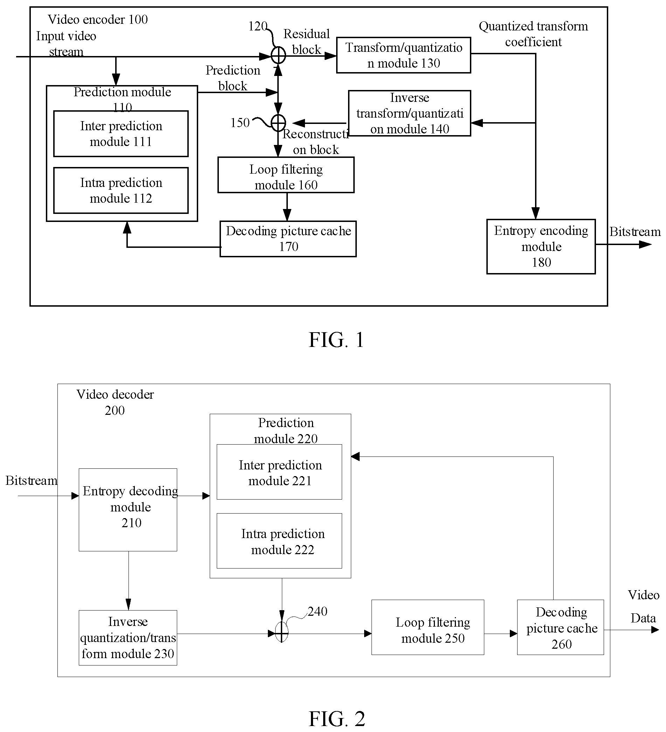

FIG. 1 is a schematic block diagram of a video encoder according to an embodiment of this application.

It should be understood that the video encoder 100 may be configured to perform lossy compression (lossy compression) on a picture, or may be configured to perform lossless compression (lossless compression) on a picture. The lossless compression may be visually lossless compression (visually lossless compression), or may be mathematically lossless compression (mathematically lossless compression).

The video encoder 100 may be applied to picture data in a luminance-chrominance (YCbCr, YUV) format. For example, a YUV ratio may be 4:2:0, 4:2:2, or 4:4:4, Y represents luma (Luma), Cb (U) represents blue chroma, Cr (V) represents red chroma, and U and V represent chroma (Chroma) for describing a color and saturation. For example, in a color format, 4:2:0 represents that every four pixels have four luma components and two chroma components (YYYYCbCr), 4:2:2 represents that every four pixels have four luma components and four chroma components (YYYYCbCrCbCr), and 4:4:4 represents full pixel display (YYYYCbCrCbCrCbCrCbCr).

For example, the video encoder 100 reads video data and partitions each frame of picture in the video data into several coding tree units (coding tree unit, CTU). In some examples, a CTU may be referred to as a "tree block", a "largest coding unit" (Largest Coding unit, LCU for short), or a "coding tree block" (coding tree block, CTB for short). Each CTU may be associated with pixel blocks of a same size in a picture. Each pixel may correspond to one luma (luminance or luma) sample and two chroma (chrominance or chroma) samples. Therefore, each CTU may be associated with one luma sampling block and two chroma sampling blocks. A CTU size is, for example, 128×128, 64×64, 32×32, or the like. One CTU may be further partitioned into several coding units (coding unit, CU) for encoding, and the CU may be a rectangular block or a square block. The CU may correspond to a prediction unit (prediction Unit, PU for short) and a transform unit (transform unit, TU for short).

In some embodiments, as shown in FIG. 1, the video encoder 100 may include a prediction module 110, a residual module 120, a transform/quantization module 130, an inverse transform/quantization module 140, a reconstruction module 150, a loop filtering module 160, a decoded picture cache 170, and an entropy encoding module 180. It should be noted that the video encoder 100 may include more, fewer, or different functional components.

Optionally, in this application, the current block may be referred to as a current coding unit (CU). The prediction block may also be referred to as a prediction picture block or a picture prediction block, and the reconstruction picture block may also be referred to as a reconstruction block or a picture reconstruction block. Due to a need for parallel processing, the picture may be partitioned into slices (slice). The slices in the same picture may be processed in parallel, that is, there is no data dependency between them. The term "frame" is a commonly used expression and may generally be understood as a picture. The frames described herein may also be replaced with pictures, slices, or the like.

In some embodiments, the prediction module 110 includes an inter prediction module 111 and an intra prediction module 112. Since there is a strong correlation between adjacent pixels in a picture of a video, spatial redundancy between adjacent pixels is eliminated by using an intra prediction method in a video encoding and decoding technology. Since there is strong similarity between adjacent pictures in a video, time redundancy between adjacent pictures is eliminated by using an inter prediction method in a video encoding and decoding technology, thereby improving encoding efficiency.

The inter prediction module 111 may be used for inter prediction. The inter prediction may include motion estimation (motion estimation) and motion compensation (motion compensation), and may refer to picture information of different pictures. The inter prediction uses motion information to find a reference block from the reference picture, and generates a prediction block according to the reference block, so as to eliminate time redundancy. Inter prediction uses motion information to find a reference block from the reference picture, and generates a prediction block according to the reference block. The motion information includes a reference picture list in which the reference picture is located, a reference picture index, and a motion vector. The motion vector may be a whole pixel or a sub-pixel. If the motion vector is a sub-pixel, an interpolation filter needs to be used in the reference picture to obtain a required sub-pixel block. Herein, a whole pixel or a sub-pixel block in the reference picture found according to the motion vector is referred to as a reference block. Some technologies directly use the reference block as a prediction block, and some technologies process the reference block to generate the prediction block. Processing the reference block to generate the prediction block may also be understood as: using the reference block as the prediction block and processing the prediction block to generate a new prediction block.

The intra prediction module 112 predicts pixel information in a current coding picture block by referring only to information about a same picture, so as to eliminate spatial redundancy.

There are multiple prediction modes for intra prediction. Take the international digital video coding standard H series as an example. H.264/AVC standard includes eight angle prediction modes and one non-angle prediction mode, and H.265/HEVC extends to 33 angle prediction modes and 2 non-angle prediction modes. (High efficiency video coding, HEVC) uses 35 prediction modes, including a plane mode (Planar), a direct current mode (DC), and 33 angle modes. An intra mode used in versatile video coding (versatile video coding, VVC) includes Planar, DC, and 65 angle modes, a total of 67 prediction modes.

It should be noted that, as a quantity of angular modes increases, intra prediction becomes more precise, and better meets requirements arising from development of high-definition and ultra-high-definition digital videos.

The residual module 120 may generate a residual block of the CU based on a pixel block of the CU and a prediction block of the CU. For example, the residual module 120 may generate a residual block of a CU, so that each sample in the residual block has a value equal to a difference between a sample in a pixel block of the CU and a corresponding sample in a prediction block of the CU.

The transform/quantization module 130 may quantize the transform coefficients. The transform/quantization module 130 may quantize the transform coefficients associated with the CU based on a quantization parameter (QP) value associated with the CU. The video encoder 100 may adjust a degree of quantization applied to the transform coefficients associated with the CU by adjusting the QP value associated with the CU.

The inverse transform/quantization module 140 may perform inverse quantization and inverse transform to the quantized transform coefficients to reconstruct a residual block from the quantized transform coefficients.

The reconstruction module 150 may add a sample of the reconstructed residual block to a corresponding sample of one or more prediction blocks generated by the prediction module 110, to generate a reconstructed picture block associated with a CU. In this way, each sample block of the CU is reconstructed, and the video encoder 100 may reconstruct the pixel block of the CU.

The loop filtering module 160 is configured to process pixels subjected to inverse transform and inverse quantization to compensate for distortion information, so as to provide a better reference for subsequent pixels to be encoded, for example, perform a deblocking filter operation to reduce a block effect of a pixel block associated with a CU.

In some embodiments, the loop filtering module 160 includes a deblocking filter module and a sample adaptive offset/adaptive loop filtering (SAO/ALF) module, where the deblocking filter module is configured to remove the block effect and the SAO/ALF module is configured to remove the ringing effect.

The decoded picture cache 170 may store reconstructed pixel blocks. The inter prediction module 111 may perform inter prediction on a PU of another picture by using a reference picture that includes a reconstructed pixel block. In addition, the intra prediction module 112 may perform intra prediction on other PUs in the same picture as the CU by using the reconstructed pixel block in the decoded picture cache 170.

The entropy encoding module 180 may receive quantized transform coefficients from the transform/quantization module 130. The entropy encoding module 180 may perform one or more entropy encoding operations on the quantized transform coefficients to generate entropy encoded data.

FIG. 2 is a schematic block diagram of a video decoder according to an embodiment of this application.

As shown in FIG. 2, the video decoder 200 includes an entropy decoding module 210, a prediction module 220, an inverse quantization/transform module 230, a reconstruction module 240, a loop filtering module 250, and a decoded picture cache 260. It should be noted that the video decoder 200 may include more, fewer, or different functional components.

The video decoder 200 may receive a bitstream. The entropy decoding module 210 may parse the bitstream to extract syntax elements from the bitstream. As part of parsing the bitstream, the entropy decoding module 210 may parse the entropy encoded syntax elements in the bitstream. The prediction module 220, the inverse quantization/transform module 230, the reconstruction module 240, and the loop filtering module 250 may decode the video data according to the syntax elements extracted from the bitstream, that is, generate decoded video data.

In some embodiments, the prediction module 220 includes an intra prediction module 222 and an inter prediction module 221.

The intra prediction module 222 may perform intra prediction to generate a prediction block of the PU. The intra prediction module 222 may generate a prediction block of a PU based on pixel blocks of spatially adjacent PUs by using an intra prediction mode. The intra prediction module 222 may further determine the intra prediction mode of the PU according to one or more syntax elements parsed from the bitstream.

The inter prediction module 221 may construct a first reference picture list (list 0) and a second reference picture list (list 1) according to the syntax elements parsed from the bitstream. In addition, if the PU uses inter prediction encoding, the entropy decoding module 210 may parse the motion information of the PU. The inter prediction module 221 may determine one or more reference blocks of the PU according to the motion information of the PU. The inter prediction module 221 may generate a prediction block of the PU according to one or more reference blocks of the PU.

The inverse quantization/transform module 230 may inversely quantize (i.e., de-quantize) the transform coefficients associated with the TU. The inverse quantization/transform module 230 may determine the degree of quantization using the QP value associated with the CU of the TU.

After the inverse quantization is performed on the transform coefficients, the inverse quantization/transform module 230 may perform one or more inverse transforms to the transform coefficients subjected to the inverse quantization to generate a residual block associated with the TU.

The reconstruction module 240 reconstructs the pixel block of the CU by using the residual block associated with the TU of the CU and the prediction block of the PU of the CU. For example, the reconstruction module 240 may add a sample of the residual block to a corresponding sample of the prediction block to reconstruct a pixel block of the CU, so as to obtain a reconstructed picture block.

The loop filtering module 250 may perform a deblocking filter operation to reduce a block effect of a pixel block associated with a CU.

The video decoder 200 may store the reconstructed picture of the CU in the decoded picture cache 260. The video decoder 200 may use the reconstructed picture in the decoded picture cache 260 as a reference picture for subsequent prediction, or transmit the reconstructed picture to a display apparatus for presentation.

A basic procedure of video encoding and decoding is as follows. At an encoding end, a picture is partitioned into blocks. For a current block, the prediction module 110 generates a prediction block of the current block by using intra prediction or inter prediction. The residual module 120 may calculate a residual block based on the prediction block and an original block of the current block, that is, a difference between the prediction block and the original block of the current block, and the residual block may also be referred to as residual information. The residual block is subjected to a process such as transformation and quantization of the transform/quantization module 130, to remove information insensitive to a human eye, so as to eliminate visual redundancy. Optionally, a residual block not subjected to transformation and quantization by the transform/quantization module 130 may be referred to as a time domain residual block, and a time domain residual block subjected to transformation and quantization by the transform/quantization module 130 may be referred to as a frequency residual block or a frequency domain residual block. The entropy coding module 180 receives the quantized transform coefficient output by the transform quantization module 130, and may perform entropy encoding on the quantized transform coefficient to output a bitstream. For example, the entropy encoding module 180 may eliminate character redundancy based on a target context model and probability information of binary bitstreams.

At the decoding end, the entropy decoding module 210 may parse a bitstream to obtain prediction information of a current block, a quantization coefficient matrix, and the like. The prediction module 220 generates a prediction block of the current block by performing intra prediction or inter prediction on the current block based on the prediction information. The inverse quantization/transform module 230 performs inverse quantization and inverse transformation on the quantization coefficient matrix obtained from the bitstream to obtain a residual block. The reconstruction module 240 adds the prediction block and the residual block to obtain a reconstruction block. The reconstruction block forms a reconstruction picture, and the loop filtering module 250 performs loop filtering on the reconstruction picture based on the picture or based on the block to obtain a decoded picture. The encoding end needs to perform similar operations as the decoding end to obtain the decoded picture. The decoded picture may also be referred to as a reconstructed picture, and the reconstructed picture may serve as a reference picture for inter prediction, for a subsequent picture.

It should be noted that block partitioning information determined by the encoding end, and mode information or parameter information such as prediction, transform, quantization, entropy encoding, and in-loop filtering, are carried in the bitstream when necessary. The decoding end determines the same block partitioning information and mode information or parameter information such as prediction, transform, quantization, entropy encoding, and in-loop filtering as the encoding end by parsing the bitstream or analyzing existing information, thereby ensuring that the decoded picture obtained at the encoding end is the same as the decoded picture obtained at the decoding end.

It may be understood that "inverse transformation" of the transform coefficient performed by the decoding side may also be referred to as "transformation" in the standard text. In this embodiment of this application, "transform" and "inverse transform" correspond to two opposite processes. For example, "transform" converts a value of a spatial domain into a coefficient of a frequency domain, and "inverse transform" converts a coefficient of a frequency domain into a value of a spatial domain. If the standard specifies only decoding, the "transform" in the standard text is part of decoding, which refers to the "inverse transform" herein. "Inverse transformation" of the transformation coefficient performed by the decoding end may also be referred to as "transformation" in the standard text.

The foregoing describes basic processes of the video encoder and the video decoder under a block-based hybrid encoding framework. With development of technologies, some modules or steps of the framework or processes may be optimized. This application is applicable to the basic processes of the video encoder and the video decoder under the block-based hybrid encoding framework, but is not limited to the framework and processes.

The foregoing describes in detail an encoding and decoding framework provided in an embodiment of this application. This application relates to a sub-block transform technology. The sub-block transform technology may be applied to the transform/inverse transform module in the encoding and decoding framework. The following describes the sub-block transform technology.

SBT is a transformation technology specified in a related standard (e.g., VVC). By using the SBT, a current block that includes residual information may be divided into two sub-blocks. Residual information of one of the sub-blocks is encoded into a bitstream after the encoding side performs transform and quantization on the residual information. Correspondingly, the residual information of the sub-block is obtained by inverse quantization and inverse transform at the decoding end. The other sub-block includes no residual information by default. An advantage of the SBT is that: when residual information of a current block is concentrated in an area in the current block, the SBT may obtain and encode the residual information in this area at a relatively low cost.

The SBT may be applied to an inter coding block. If an SBT tool is selected for the inter coding block, the decoder parses the bitstream to obtain location information of the sub-block and division ratio information of the sub-block. In other words, the decoder parses the bitstream to obtain an area that uses the sub-block transform and an area that does not use the sub-block transform. Then, the decoder sets an area that uses the sub-block transform to be a transform unit with residual information, and sets an area that does not use the sub-block transform to be a transform unit without residual information.

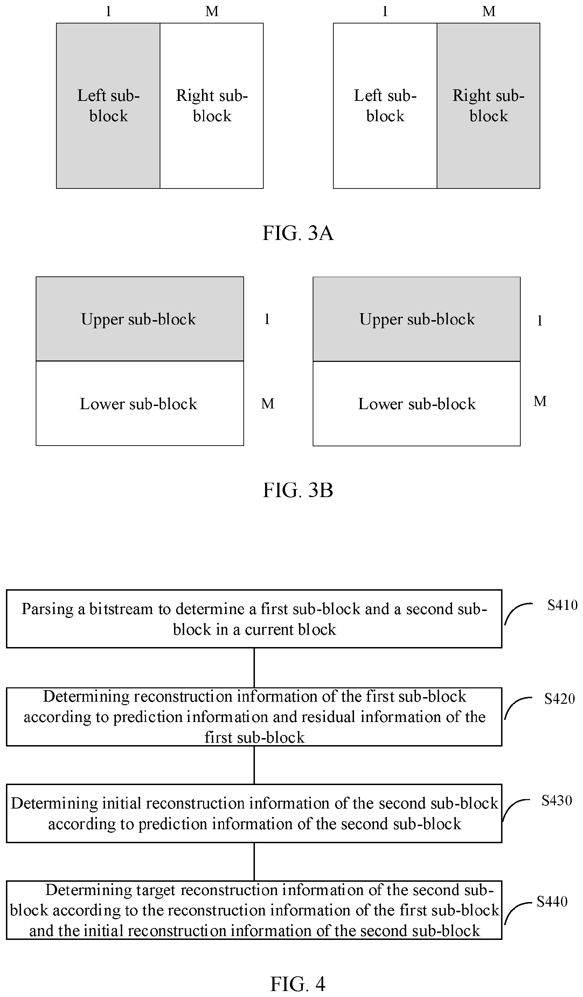

In the related standards, the SBT has 8 sub-block transform manners. As shown in FIG. 3A and FIG. 3B, the SBT may divide the current block into two sub-blocks in a horizontal direction according to a ratio of 1/2 (or 1/4), or into two sub-blocks in a vertical direction according to a ratio of 1/2 (or 1/4). The SBT may further specify a sub-block with residual information in the obtained two sub-blocks, and select a transformation manner for the horizontal direction and the vertical direction of the sub-block. In the encoding and decoding process, only the sub-block with residual information is subjected to transform or inverse transform, and the sub-block without residual information is not subjected to transform or inverse transform by default. The following describes in detail the sub-block division manner in the SBT.

As shown in FIG. 3A, if divided in a vertical direction, the current block may be divided into a left sub-block and a right sub-block, where a gray sub-block in FIG. 3A represents a sub-block that includes a residual, and a white sub-block represents a sub-block that does not include a residual. A ratio of the two sub-blocks in the current block is 1: M, where M is 1 or 3. As shown in FIG. 3B, if divided in a horizontal direction, the current block may be divided into an upper sub block and a lower sub block, where a gray sub block in FIG. 3B is a sub block that includes a residual, and a white sub block indicates a sub block that does not include a residual. A ratio of the two sub-blocks is 1: M, where M is 1 or 3.

According to the foregoing method, eight sub-block division manners may be obtained. In each division manner, a sub-block that includes the residual corresponds to a specific transform manner. Specific descriptions are as follows.
(1) The current block is divided into two sub-blocks in a vertical direction according to a ratio of 1/2 and 1/2, where the left sub-block includes residual information, and the right sub-block does not include residual information. In this division manner, transformation and inverse transformation is performed on the left sub-block in the horizontal direction by using a DCT-8 transform kernel, and transformation and inverse transformation is performed on the left sub-block in the vertical direction by using a DST-7 transform kernel.
(2) The current block is divided into two sub-blocks in the vertical direction according to a ratio of 1/4 and 3/4, where the left sub-block includes residual information, and the right sub-block does not include residual information. In this division manner, transformation and inverse transformation is performed on the left sub-block in the horizontal direction by using the DCT-8 transform kernel, and transformation and inverse transformation is performed on the left sub-block in the vertical direction by using the DST-7 transform kernel.
(3) The current block is divided into two sub-blocks in the vertical direction according to a ratio of 1/2 and 1/2, where the right sub-block includes residual information, and the left sub-block does not include residual information. Transformation and inverse transformation is performed on the right sub-block in the horizontal direction by using the DST-7 transform kernel, and transformation and inverse transformation is performed on the right sub-block in the vertical direction by using the DST-7 transform kernel.
(4) The current block is divided into two sub-blocks in the vertical direction according to a ratio of 1/4 and 3/4, where the right sub-block includes residual information, and the left sub-block does not include residual information. Transformation and inverse transformation is performed on the right sub-block in the horizontal direction by using the DST-7 transform kernel, and transformation and inverse transformation is performed on the right sub-block in the vertical direction by using the DST-7 transform kernel.
(5) The current block is divided into two sub-blocks in a horizontal direction according to a ratio of 1/2 and 1/2, where the upper sub-block includes residual information, and the lower sub-block does not include residual information. Transformation and inverse transformation is performed on the upper sub-block in the horizontal direction by using the DST-7 transform kernel, and transformation and inverse transformation is performed on the upper sub-block in the vertical direction by using the DCT-8 transform kernel.
(6) The current block is divided into two sub-blocks in the horizontal direction according to a ratio of 1/4 and 3/4, where the upper sub-block includes residual information, and the lower sub-block does not include residual information. Transformation and inverse transformation is performed on the upper sub-block in the horizontal direction by using the DST-7 transform kernel, and transformation and inverse transformation is performed on the upper sub-block in the vertical direction by using the DCT-8 transform kernel.
(7) The current block is divided into two sub-blocks in the horizontal direction according to a ratio of 1/2 and 1/2, where the lower sub-block includes residual information, and the upper sub-block does not include residual information. Transformation and inverse transformation is performed on the lower sub-block in the horizontal direction by using the DST-7 transform kernel, and transformation and inverse transformation is performed on the lower sub-block in the vertical direction by using the DST-7 transform kernel.
(8) The current block is divided into two sub-blocks in the horizontal direction according to a ratio of 1/4 and 3/4, where the lower sub-block includes residual information, and the upper sub-block does not include residual information. Transformation and inverse transformation is performed on the lower sub-block in the horizontal direction by using the DST-7 transform kernel, and transformation and inverse transformation is performed on the lower sub-block in the vertical direction by using the DST-7 transform kernel.

When decoding a block-level syntax element, the decoder obtains, by using a syntax element related to the SBT, a location of a sub-block that includes residual information and a direction of sub-block division. During reconstruction of the current block, the sub-block is reconstructed according to a location of the sub-block that includes the residual information and residual information obtained by performing inverse quantization and inverse transform.

The SBT technology considers the residual of one sub-block obtained by means of division to zero by default. In this way, an operation of the encoding and decoding end can be simplified, and a bit rate can be reduced, so that an overall rate distortion cost can be relatively small. However, in an actual video sequence, it is not common that there is no residual information at all in sub-blocks divided based on the encoding block. Forcing the residual information of the sub-block to be zero may degrade the encoding performance to a certain extent. Therefore, how to further improve the encoding performance is a problem that needs to be solved.

For the foregoing problem, an embodiment of this application provides an encoding method. The method includes: determining a first sub-block and a second sub-block in a current block; determining reconstruction information of the first sub-block according to prediction information and residual information of the first sub-block; determining initial reconstruction information of the second sub-block according to prediction information of the second sub-block, where the initial reconstruction information of the second sub-block does not include residual information; and determining target reconstruction information of the second sub-block according to the reconstruction information of the first sub-block and the initial reconstruction information of the second sub-block.

In addition, an embodiment of this application further provides a decoding method. The method includes: parsing a bitstream to determine a first sub-block and a second sub-block in a current block; determining reconstruction information of the first sub-block according to prediction information and residual information of the first sub-block; determining initial reconstruction information of the second sub-block according to prediction information of the second sub-block, where the initial reconstruction information of the second sub-block does not include residual information; and determining target reconstruction information of the second sub-block according to the reconstruction information of the first sub-block and the initial reconstruction information of the second sub-block.

In embodiments of this application, the initial reconstruction information (not including the residual information) of the second sub-block is processed according to the reconstruction information (including the residual information) of the first sub-block. In this way, the residual information is introduced into the second sub-block, thereby improving the encoding and decoding performance.

The following describes the decoding method in embodiments of this application in detail by examples.

FIG. 4 is a schematic flowchart of a decoding method according to an embodiment of this application. The method in FIG. 4 may be applied to a decoder.

Referring to FIG. 4, in step S410, a bitstream is parsed to determine a first sub-block and a second sub-block in a current block. The current block may refer to a current block to be decoded. In some implementations, the current block is a luma block. In another implementation, the current block may also be chroma block. The current block may be an inter prediction block, or may be an intra prediction block. The intra prediction block is used as an example, and the current block may be a prediction block based on the intra block copy mode.

The foregoing first sub-block may be a sub-block that includes residual information. The second sub-block may be a sub-block that does not include residual information. The first sub-block including the residual information may be understood as: the reconstruction information corresponding to the first sub-block includes the residual information. That is, an operation such as inverse quantization or inverse transform is required to be performed for obtaining the reconstruction information of the first sub-block. The second sub-block not including the residual information may be understood as: reconstruction information of the second sub-block does not include the residual information. That is, the reconstruction information of the second sub-block does not need to be obtained by performing operations such as inverse quantization and inverse transform.

Locations of the first sub-block and the second sub-block in the current block may be fixed locations. Alternatively, the locations of the first sub-block and the second sub-block in the current block may be determined based on first information obtained by parsing the bitstream. For example, the first information may indicate a division ratio and/or a division direction of the current block. In addition, the first information may further indicate which sub-block in the sub-block obtained by means of division is the first sub-block (that is, a sub-block includes residual information), and which sub-block is the second sub-block (that is, a sub-block does not include residual information).

Referring to FIG. 4, in step S420, reconstruction information of the first sub-block is determined according to prediction information and residual information of the first sub-block. For example, a sum of the prediction information and the residual information of the first sub-block may be used as the reconstruction information of the first sub-block.

Before step S420, operations such as prediction, inverse quantization, and inverse transformation may be performed on the first sub-block, so as to determine the prediction information and the residual information of the first sub-block. It should be understood that the prediction information of the first sub-block may be prediction information directly obtained after a prediction operation, or may be target information obtained by processing the information obtained after the prediction operation (the target information may also be understood as prediction information obtained after certain processing). For example, information obtained after luma mapping and chroma scaling is performed on the prediction information of the first sub-block, may serve as the prediction information of the first sub-block.

Referring to FIG. 4 again, in step S430, initial reconstruction information of the second sub-block is determined according to prediction information of the second sub-block. It should be understood that the prediction information of the second sub-block may be information directly obtained after the prediction operation, or may be target information obtained by processing the prediction information obtained after the prediction operation (the target information may also be understood as prediction information obtained after certain processing). For example, information obtained after the luma mapping and the chroma scaling is performed on the prediction information of the second sub-block, may serve as the prediction information of the second sub-block. In addition, the initial reconstruction information of the second sub-block determined in step S430 does not include the residual information. For example, the prediction information of the second sub-block may be directly used as the initial reconstruction information of the second sub-block.

Referring to FIG. 4 again, in step S440, the target reconstruction information of the second sub-block is determined according to the reconstruction information of the first sub-block and the initial reconstruction information of the second sub-block. Alternatively, the target reconstruction information of the second sub-block is determined by processing the initial reconstruction information of the second sub-block according to the reconstruction information of the first sub-block. For example, the reconstruction information of the first sub-block may be fused with the initial reconstruction information of the second sub-block to determine the target reconstruction information of the second sub-block.

In embodiments of this application, the initial reconstruction information (not including the residual information) of the second sub-block is processed according to the reconstruction information (including the residual information) of the first sub-block, thereby introducing the residual information into the second sub-block, and improving the decoding performance.

An implementation of step S440 is not specifically limited in embodiment of this application. In some implementations, the reconstruction information of the first sub-block may be fused (or weighted fusion) with the initial reconstruction information of the second sub-block. In another implementation, a first filter may be first determined based on the prediction information and the reconstruction information of the first sub-block. The first filter may indicate an association relationship or a mapping relationship between the prediction information and the reconstruction information of the first sub-block. Then, the first filter may perform filtering processing on the initial reconstruction information of the second sub-block to determine the target reconstruction information of the second sub-block. The above operations are performed because both the first sub-block and the second sub-block are located in the current block, and a relationship between the prediction information and the reconstruction information of the first sub-block is similar to a relationship between the prediction information and the reconstruction information of the second sub-block. Therefore, filtering processing is performed on the initial reconstruction information of the second sub-block based on the first filter, thereby improving accuracy of the reconstruction information of the second sub-block.

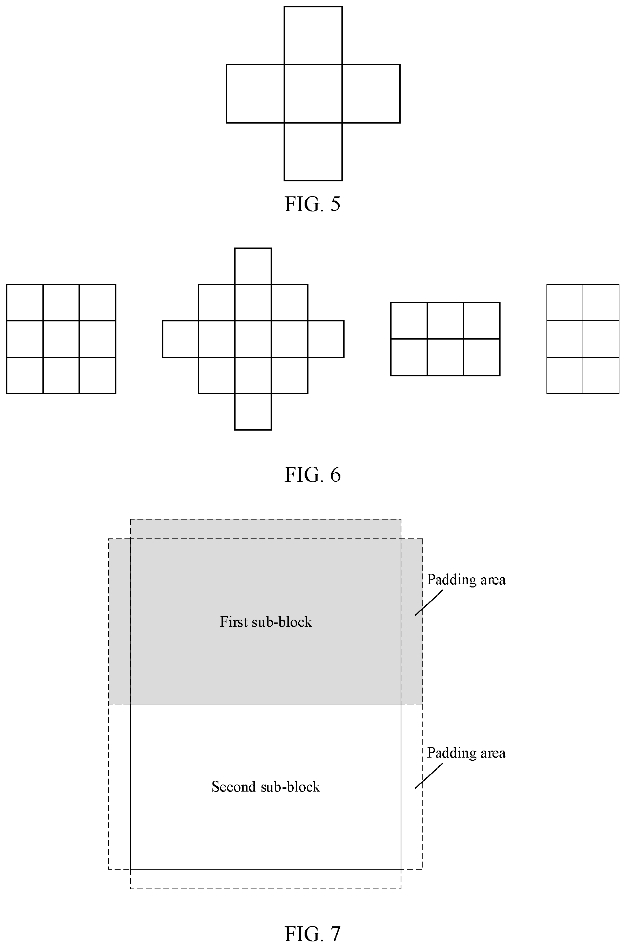

A shape of the first filter is not specifically limited in embodiments of this application. For example, the first filter may be, for example, a 5-tap filter shown in FIG. 5. Alternatively, the first filter may be a filter of another shape, as shown in FIG. 6.

The first filter may perform filtering processing on the initial reconstruction information of the second sub-block based on a filtering coefficient. The filtering coefficient of the first filter may be obtained by training based on the relationship between the prediction information and the reconstruction information of the first sub-block. For example, the first filter may slide in an area in which the first sub-block is located. In a sliding process, the prediction information of the first sub-block may be used as input information of the first filter, and the reconstruction information of the first sub-block may be used as output information of the first filter, so as to construct an autocorrelation coefficient matrix and a cross-correlation coefficient matrix. Then, the filtering coefficient of the first filter may be determined based on the autocorrelation coefficient matrix and the cross-correlation coefficient matrix.

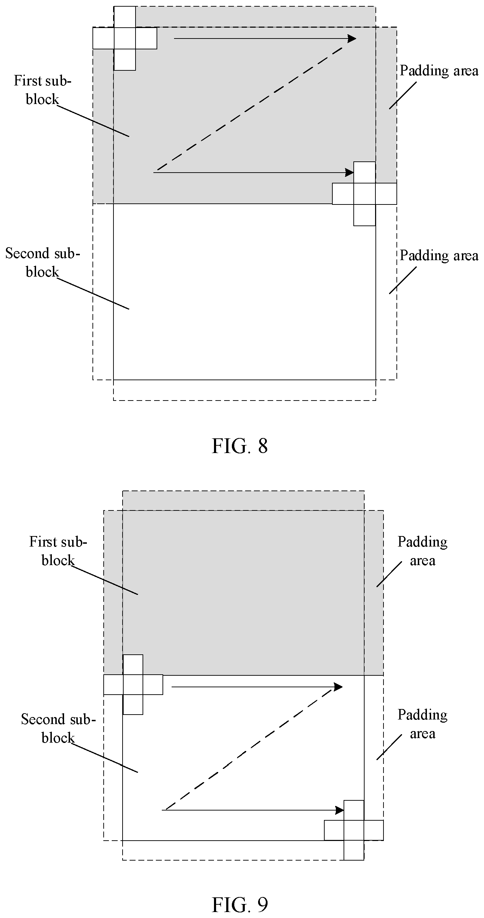

As an example, before sliding, a surrounding area of the first sub-block may be padded to obtain a padding area. The padding information of the padding area may be, for example, reconstruction information of an edge location of the first sub-block. FIG. 7 shows a location of the padding area of the first filter. As shown in FIG. 7, one row or one column of samples may be padded in each of the upper side, the left side, and the right side of the first sub-block. After the padding area is obtained, the first filter may slide in the first sub-block and the padding area around the first sub-block. The first filter being a 5-tap filter is used as an example. Referring to FIG. 8, the first filter may slide, horizontally from left to right, from the upper left corner to the lower right corner, so as to construct a linear equation based on the autocorrelation coefficient matrix and the cross-correlation coefficient matrix, as shown in the following formula (1): $\left[\begin{matrix}{\sum }_{\left‖R\right‖} \left.t\left[r+{p}_{0}\right]t\left[r+{p}_{0}\right]\right) & ⋯ & {\sum }_{\left‖R\right‖} t \left[r+{p}_{N - 1}\right] t \left[r+{p}_{0}\right] \\ ⋮ & ⋱ & ⋮ \\ {\sum }_{\left‖R\right‖} \left.t\left[r+{p}_{0}\right]t\left[r+{p}_{N - 1}\right]\right) & ⋯ & {\sum }_{\left‖R\right‖} t \left[r+{p}_{N - 1}\right] t \left[r+{p}_{N - 1}\right]\end{matrix}\right] \left[\begin{matrix}{c}_{0} \\ ⋮ \\ {c}_{N - 1}\end{matrix}\right] = \left[\begin{matrix}{\sum }_{\left‖R\right‖} t \left[r\right] ′ t \left[r+{p}_{0}\right] \\ ⋮ \\ {\sum }_{\left‖R\right‖} t \left[r\right] ′ t \left[r+{p}_{N - 1}\right]\end{matrix}\right]$ (1)

In which, R represents a sub-block area including a residual coefficient, and p_0 to p_(N-1) respectively represent five input locations on the first filter. For example, t[r+p_0] represents input information of the first filter at the (p_0)-th input location of the r-th sample location, and t[r]' represents the reconstruction information of the r-th sample location. In this example, the first filter is a 5-tap filter, so N=5. Five filtering coefficients of the first filter, that is, c_0 to c_4, may be obtained by solving the foregoing linear equation.

After the filtering coefficient of the first filter is obtained, filtering processing may be performed on the initial reconstruction information of the second sub-block based on the filtering coefficient of the first filter. For example, as shown in FIG. 9, the first filter may slide in the second sub-block and a padding area around the second sub-block (the padding area around the second sub-block may be determined based on the initial reconstruction information of the second sub-block). In a sliding process, the initial reconstruction information of the second sub-block may be used as input information of the first filter, and a filtering equation is constructed with reference to the filtering coefficient. Correspondingly, a calculation result of the foregoing filtering equation (that is, the output information of the filter) is used as the target reconstruction information of the second sub-block.

For example, the filtering equation may be shown in formula (2): ${o}_{r} = {\sum }_{n = 0}^{4} \left({t}_{r + {p}_{n}}\times {c}_{n}\right)$ (2)

In which, *t_{r+pₙ}* represents input information (initial reconstruction information) of the *pₙ*-th input location corresponding to the first filter, at the r-th location of the second sub-block, *cₙ* represents the n-th filter coefficient of the first filter, and *oᵣ* represents a filtered value corresponding to the r-th position of the second sub-block. Generally, a filtered value may be limited to a certain range. For example, at sample value precision of 10bit, each filter output value *oᵣ* may be limited to a range of 0 to 2¹⁰⁻¹.

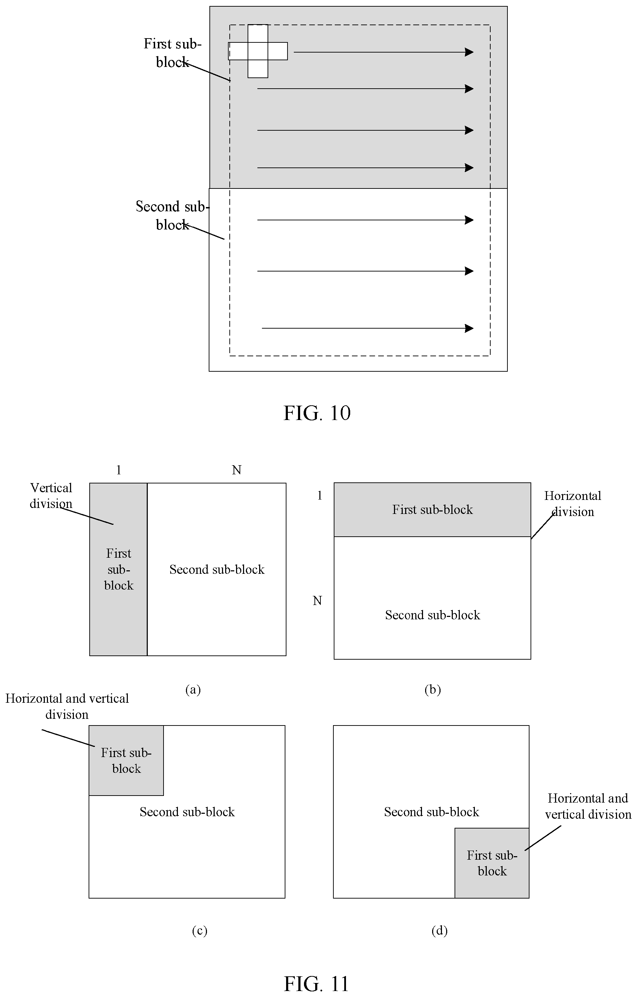

In some implementations, as shown in FIG. 10, the first filter may slide in only an area (a dashed area in FIG. 10) within the first sub-block and/or the second sub-block. In this case, it is unnecessary to pad the surrounding areas of the first sub-block and/or the second sub-block, so that operations can be simplified.

The decoding method shown in FIG. 4 may be executed based on an indication of one or more pieces of identification information. The one or more pieces of identification information may be obtained by parsing the bitstream. The following describes in detail the identification information that may be involved in the embodiments of this application.

In some implementations, the bitstream may be parsed to determine first identification information. The first identification information is used to indicate or determine whether to perform filtering processing on the initial reconstruction information of the second sub-block. The first identification information may be coding block-level information.

For example, cu_fsbt_flag may be used to represent the first identification information (certainly, the first identification information may also be represented by using any other letter and/or number). The cu_fsbt_flag may be represented by a context adaptive arithmetic entropy coding syntax element (i.e., ae (v)).

In some implementations, a value of the cu_fsbt_flag may be 0 or 1. For example, if a value of the cu_fsbt_flag is 0, it may indicate that filtering processing is not performed on the initial reconstruction information of the second sub-block. If the value of the cu_fsbt_flag is 1, it may indicate that filtering processing is performed on the initial reconstruction information of the second sub-block.

In some implementations, if the cu_fsbt_flag does not exist in the bitstream, the cu_fsbt_flag may be a default value (for example, 0).

In some implementations, the bitstream may be parsed to determine second identification information. The second identification information may be used to indicate or determine whether to perform step S440 described above, or the second identification information may be used to indicate whether to perform the filtering operation described above. The second identification information may be general constraint information, sequence-level information, frame-level or picture-level information, slice-level information, tile-level information, or coding tree unit-level information.

For example, the sps_fsbt_enabled_flag may be used to represent the second identification information (certainly, the second identification information may also be represented by using any other letter and/or number). The sps_fsbt_enabled_flag may be represented by a 1-bit unsigned integer (i.e., u (1)).

In some implementations, a value of the sps_fsbt_enabled_flag may be 0 or 1. For example, if a value of the sps_fsbt_enabled_flag is 0, it may indicate that step S440 is not performed. If the value of the sps_fsbt_enabled_flag is 1, it may indicate that step S440 is performed.

In some implementations, if the sps_fsbt_enabled_flag does not exist in the bitstream, the sps_fsbt_enabled_flag may be a default value (for example, 0).

In some implementations, the bitstream may be parsed to determine third identification information. The third identification information is used to indicate or determine whether the current block uses a sub-block transform mode. For example, if the third identification information indicates that the current block uses the sub-block transform mode, step S410 may be performed. If the third identification information indicates that the current block does not use the sub-block transform mode, step S410 may not be performed.

For example, the cu_sbt_flag may be used to represent the third identification information (certainly, the third identification information may also be represented by using any other letter and/or number). The cu_sbt_flag may be represented by a context adaptive arithmetic entropy coding syntax element (i.e., ae (v)).

In some implementations, a value of the cu_sbt_flag may be 0 or 1. For example, if a value of the cu_sbt_flag is 0, it may indicate that the current block does not use the sub-block transform mode, in other words, the current block is not divided into sub-blocks according to step S410, but the reconstruction information of the current block is determined according to the residual information of the current block. If the value of the cu_sbt_flag is 1, it may indicate that the first sub-block and the second sub-block of the current block are determined by using the sub-block transform mode.

In some implementations, if the cu_sbt_flag does not exist in the bitstream, the cu_sbt_flag may be a default value (for example, 0).

The locations of the first sub-block and the second sub-block in the current block are not specifically limited in embodiments of this application. For example, the locations of the first sub-block and the second sub-block in the current block may be determined in a sub-block division manner in the sub-block transform mode. That is, the current block is divided in a horizontal direction or a vertical direction of the current block according to a ratio of 1/2 or 1/4, so as to obtain the first sub-block and the second sub-block. Alternatively, embodiments of this application may propose a new sub-block division manner (that is, embodiments of this application may be understood as a sub-mode of the SBT, or may be understood as a new transform mode different from the SBT). With reference to FIG. 11, the following describes in more detail a sub-block division manner provided in an embodiment of this application by examples.

As shown in (a) of FIG. 11, the current block is divided into two sub-blocks in a vertical direction. A gray sub-block in (a) of FIG. 11 is the first sub block, and a white sub-block is the second sub-block. A height size ratio of the two sub-blocks is 1: N. A value of N may not be equal to 1 or 3.

As shown in (b) of FIG. 11, the current block is divided into two sub-blocks in a horizontal direction. A gray sub-block in (b) of FIG. 11 is the first sub-block, and a white sub-block is the second sub-block. A height size ratio of the two sub-blocks is 1: N. A value of N may not be equal to 1 or 3.

As shown in (c) of FIG. 11, the current block is divided into sub-blocks in both the vertical direction and the horizontal direction. A gray sub-block in (c) of FIG. 11 is the first sub-block, and a white sub-block is the second sub-block.

As shown in (d) of FIG. 11, the current block is divided into sub-blocks in both the vertical direction and the horizontal direction. A gray sub-block in (d) of FIG. 11 is the first sub-block, and a white sub-block is the second sub-block.

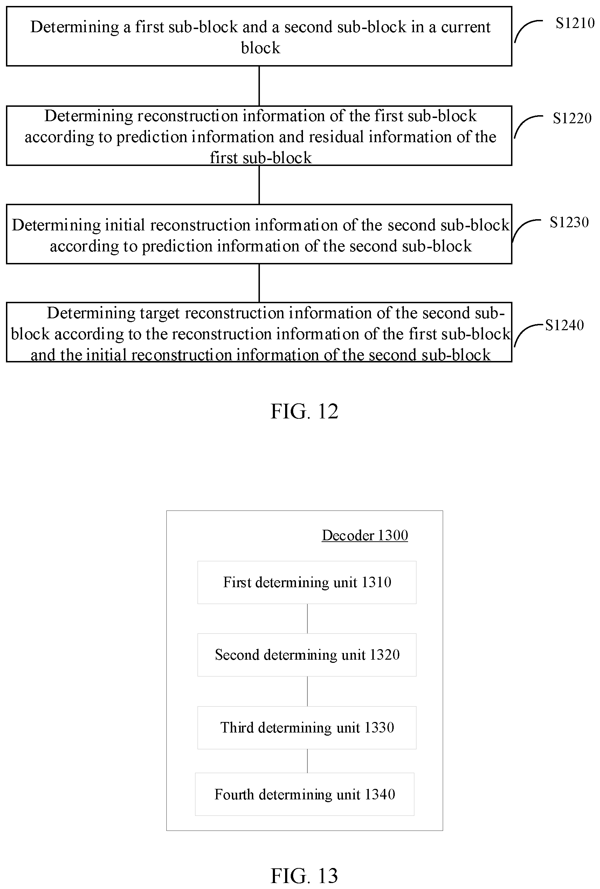

With reference to FIG. 4, the foregoing describes in detail the decoding method provided in the embodiment of this application. With reference to FIG. 12, the following describes in detail an encoding method provided in an embodiment of this application.

FIG. 12 is a schematic flowchart of an encoding method according to an embodiment of this application. The method in FIG. 12 may be applied to an encoder.

Referring to FIG. 12, in step S1210, a first sub-block and a second sub-block in a current block are determined. The current block may refer to a current block to be encoded. In some implementations, the current block is a luma block. In another implementation, the current block may also be a chroma block. The current block may be an inter prediction block, or may be an intra prediction block. The intra prediction block is used as an example, and the current block may be a prediction block based on an intra block copy mode.

The foregoing first sub-block may be a sub-block that includes residual information. The second sub-block may be a sub-block that does not include residual information. The residual information in the first sub-block may be processed by performing an operation such as prediction, transformation, and quantization, so as to transmit the residual information to the decoding end via a bitstream. Because the second sub-block does not include the residual information, an operation such as transformation or quantization may not be performed on the second sub-block.

In some implementations, the first information may be written into the bitstream. The first information may indicate locations of the first sub-block and the second sub-block in the current block. For example, the first information may indicate a division ratio and/or a division direction of the current block. In addition, the first information may further indicate which sub-block in the sub-block obtained by division is the first sub-block (that is, a sub-block including residual information), and which sub-block is the second sub-block (that is, a sub-block not including residual information).

Referring to FIG. 12 again, in step S1220, reconstruction information of the first sub-block is determined according to prediction information and residual information of the first sub-block. For example, a sum of prediction information and residual information of the first sub-block may be used as the reconstruction information of the first sub-block.

It should be understood that the prediction information of the first sub-block may be information directly obtained after a prediction operation, or may be target information obtained by processing the information obtained after the prediction operation. For example, luma mapping and chroma scaling may be performed on information obtained by performing a prediction operation on the first sub-block, and information obtained after the scaling is used as the prediction information of the first sub-block.

Referring to FIG. 12 again, in step S1230, initial reconstruction information of the second sub-block is determined according to the prediction information of the second sub-block. It should be understood that the prediction information of the second sub-block may be information directly obtained after the prediction operation, or may be information obtained by processing the information obtained after the prediction operation. For example, luma mapping and chroma scaling may be performed on information obtained by performing a prediction operation on the second sub-block, and information obtained after the scaling is used as the prediction information of the second sub-block. In addition, the initial reconstruction information of the second sub-block determined in step S1230 does not include the residual information. For example, the prediction information of the second sub-block may be directly used as the initial reconstruction information of the second sub-block.

Referring to FIG. 12 again, in step S1240, target reconstruction information of the second sub-block is determined according to the reconstruction information of the first sub-block and the initial reconstruction information of the second sub-block. Alternatively, the target reconstruction information of the second sub-block is determined by processing the initial reconstruction information of the second sub-block according to the reconstruction information of the first sub-block. For example, the reconstruction information of the first sub-block may be fused with the initial reconstruction information of the second sub-block to determine the target reconstruction information of the second sub-block.

According to the encoding method provided in embodiments of this application, the initial reconstruction information of the second sub-block (not including the residual information) is processed according to the reconstruction information of the first sub-block (including the residual information), thereby introducing the residual information into the second sub-block, and improving the encoding performance.

An implementation of step S1240 is not specifically limited in embodiments of this application. In some implementations, weighted fusion may be performed on the reconstruction information of the first sub-block and the initial reconstruction information of the second sub-block. In another implementation, a first filter may be first determined based on the prediction information and the reconstruction information of the first sub-block. The first filter may indicate an association relationship or a mapping relationship between the prediction information and the reconstruction information of the first sub-block. Then, filtering processing may be performed on the initial reconstruction information of the second sub-block based on the first filter to determine the target reconstruction information of the second sub-block. The above operations are performed because both the first sub-block and the second sub-block are located in the current block, and a relationship between the prediction information and the reconstruction information of the first sub-block is similar to a relationship between the prediction information and the reconstruction information of the second sub-block. Therefore, filtering processing is performed on the initial reconstruction information of the second sub-block based on the first filter, thereby improving accuracy of the reconstruction information of the second sub-block.

A shape of the first filter is not specifically limited in embodiments of this application. For example, the first filter may be, for example, the 5-tap filter shown in FIG. 5. Alternatively, the first filter may be a filter of another shape, as shown in FIG. 6.

The first filter may perform filtering processing on the initial reconstruction information of the second sub-block based on a filtering coefficient. The filtering coefficient of the first filter may be obtained by training based on the relationship between the prediction information and the reconstruction information of the first sub-block. For example, the first filter may slide in an area in which the first sub-block is located. In a sliding process, the prediction information of the first sub-block may be used as input information of the first filter, and the reconstruction information of the first sub-block may be used as output information of the first filter, so as to construct an autocorrelation coefficient matrix and a cross-correlation coefficient matrix. Then, the filtering coefficient of the first filter may be determined based on the autocorrelation coefficient matrix and the cross-correlation coefficient matrix.

As an example, before sliding, a surrounding area of the first sub-block may be first padded to obtain a padding area. Padding information of the padding area may be, for example, reconstruction information of an edge location of the first sub-block. FIG. 7 shows a location of the padding area of the first filter. As shown in FIG. 7, one row or one column of samples may be padded in each of the upper side, the left side, and the right side of the first sub-block. After the padding area is obtained, the first filter may slide in the first sub-block and the padding area around the first sub-block. The first filter being a 5-tap filter is used as an example. Referring to FIG. 8, the first filter may slide, horizontally from left to right, from the upper left corner to the lower right corner, so as to construct a linear equation based on the autocorrelation coefficient matrix and the cross-correlation coefficient matrix, as shown in the following formula (3): $\left[\begin{matrix}{\sum }_{\left‖R\right‖} \left.t\left[r+{p}_{0}\right]t\left[r+{p}_{0}\right]\right) & ⋯ & {\sum }_{\left‖R\right‖} t \left[r+{p}_{N - 1}\right] t \left[r+{p}_{0}\right] \\ ⋮ & ⋱ & ⋮ \\ {\sum }_{\left‖R\right‖} \left.t\left[r+{p}_{0}\right]t\left[r+{p}_{N - 1}\right]\right) & ⋯ & {\sum }_{\left‖R\right‖} t \left[r+{p}_{N - 1}\right] t \left[r+{p}_{N - 1}\right]\end{matrix}\right] \left[\begin{matrix}{c}_{0} \\ ⋮ \\ {c}_{N - 1}\end{matrix}\right] = \left[\begin{matrix}{\sum }_{\left‖R\right‖} t \left[r\right] ′ t \left[r+{p}_{0}\right] \\ ⋮ \\ {\sum }_{\left‖R\right‖} t \left[r\right] ′ t \left[r+{p}_{N - 1}\right]\end{matrix}\right]$ (3)

In which, R represents a sub-block area including a residual coefficient, and p_0 to p_(N-1) respectively represent five locations on the first filter. For example, t[r+p_0] represents input information of the first filter at the (p_0)-th input location of the r-th sample location (that is predication information or a target value), and t[r]' represents the reconstruction information of the r-th sample location. In this example, the first filter is a 5-tap filter, so N=5. Five filtering coefficients of the first filter, that is, c_0 to c_4, may be obtained by solving the foregoing linear equation.

After the filtering coefficient of the first filter is obtained, filtering processing may be performed on the initial reconstruction information of the second sub-block based on the filtering coefficient of the first filter. For example, as shown in FIG. 9, the first filter may slide in an area in which the second sub-block is located (similar to the first sub-block, before sliding, an area around the second sub-block may be padded based on the initial reconstruction information of the second sub-block), and the initial reconstruction information of the second sub-block is used as input information of the first filter to construct a filtering equation with reference to the filtering coefficient. Correspondingly, a calculation result of the foregoing filtering equation, that is, the output information of the filter, is used as the target reconstruction information of the second sub-block.

For example, the filtering equation may be shown in formula (4): ${o}_{r} = {\sum }_{n = 0}^{4} \left({t}_{r + {p}_{n}}\times {c}_{n}\right)$ (4)

In which, *t_{r+pₙ}* represents input information (initial reconstruction information) of the *pₙ*-th input location corresponding to the first filter, at the r-th location of the second sub-block, *cₙ* represents the n-th filter coefficient of the first filter, and *oᵣ* represents a filtered value corresponding to the r-th position of the second sub-block. Generally, a filtered value may be limited to a certain range. For example, at sample value precision of 10bit, each filter output value *oᵣ* may be limited to a range of 0 to 2¹⁰⁻¹.

In some implementations, as shown in FIG. 10, the first filter may slide in only an area (a dashed area in FIG. 10) within the first sub-block and/or the second sub-block. In this case, it is unnecessary to pad the surrounding areas of the first sub-block and/or the second sub-block, so that operations can be simplified.

In some implementations, according to embodiments of this application, identification information may be written into the bitstream, so as to instruct the decoding end to perform a corresponding decoding operation. The following describes in detail the identification information that may be involved in the embodiments of this application.

In some implementations, first identification information may be written into the bitstream. The first identification information is used to indicate or determine whether to perform filtering processing on the initial reconstruction information of the second sub-block. The first identification information may be coding block-level information.

For example, the cu_fsbt_flag may be used to represent the first identification information (certainly, the first identification information may also be represented by using any other letter and/or number). The cu_fsbt_flag may be represented by a context adaptive arithmetic entropy coding syntax element (i.e., ae (v)).

In some implementations, a value of the cu_fsbt_flag may be 0 or 1. For example, if a value of the cu_fsbt_flag is 0, it may indicate that filtering processing is not performed on the initial reconstruction information of the second sub-block. If the value of the cu_fsbt_flag is 1, it may indicate that filtering processing may be performed on the initial reconstruction information of the second sub-block.

In some implementations, if the cu_fsbt_flag does not exist in the bitstream, the cu_fsbt_flag may be a default value (for example, 0).

In some implementations, second identification information may be written into the bitstream. The second identification information may be used to indicate or determine whether to perform step S1240 described above, or the second identification information may be used to indicate whether to perform the filtering operation described above. The second identification information may be general constraint information, sequence-level information, frame-level information, slice-level information, tile-level information, or coding tree unit-level information.

For example, the sps_fsbt_enabled_flag may be used to represent the second identification information (certainly, the second identification information may also be represented by using any other letter and/or number). The sps_fsbt_enabled_flag may be represented by a 1-bit unsigned integer (i.e., u (1)).

In some implementations, a value of the sps_fsbt_enabled_flag may be 0 or 1. For example, if the value of sps_fsbt_enabled_flag is 0, it may indicate that step S440 is not performed. If the value of the sps_fsbt_enabled_flag is 1, it may indicate that step S440 is performed.

In some implementations, if the sps_fsbt_enabled_flag does not exist in the bitstream, the sps_fsbt_enabled_flag may be a default value (for example, 0).

In some implementations, third identification information may be written into the bitstream. The third identification information is used to indicate or determine whether the current block uses the sub-block transform mode. For example, if the third identification information indicates that the current block uses the sub-block transform mode, step S410 may be performed. If the third identification information indicates that the current block does not use the sub-block transform mode, step S410 may not be performed.

For example, the cu_sbt_flag may be used to represent the third identification information (certainly, the third identification information may also be represented by using any other letter and/or number). The cu_sbt_flag may be represented by a context adaptive arithmetic entropy coding syntax element (i.e., ae (v)).

In some implementations, a value of the cu_sbt_flag may be 0 or 1. For example, if a value of the cu_sbt_flag is 0, it may indicate that the current block does not use the sub-block transform mode, in other words, the current block is not divided into sub-blocks according to step S410, but the reconstruction information of the current block is determined according to the residual information of the current block. If the value of the cu_sbt_flag is 1, it may indicate that the first sub-block and the second sub-block of the current block are determined by using the sub-block transform mode.

In some implementations, if the cu_sbt_flag does not exist in the bitstream, the cu_sbt_flag may be a default value (for example, 0).

The locations of the first sub-block and the second sub-block in the current block are not specifically limited in embodiments of this application. For example, the first sub-block and the second sub-block may be obtained in a sub-block division manner of SBT, that is, the current block is divided in a horizontal direction or a vertical direction of the current block according to a ratio of 1/2 or 1/4, so as to obtain the first sub-block and the second sub-block. Alternatively, embodiments of this application may propose a new sub-block division manner. With reference to FIG. 11, the following describes in more detail a sub-block division manner provided in an embodiment of this application by examples.

As shown in (a) of FIG. 11, the current block is divided into two sub-blocks in a vertical direction. A gray sub-block in (a) of FIG. 11 is the first sub-block, and a white sub-block is the second sub-block. A height size ratio of the two sub-blocks is 1: N. A value of N may not be equal to 1 or 3.

As shown in (b) of FIG. 11, the current block is divided into two sub-blocks in a horizontal direction. A gray sub-block in (b) of FIG. 11 is the first sub-block, and a white sub-block is the second sub-block. A height size ratio of the two sub-blocks is 1: N. A value of N may not be equal to 1 or 3.

As shown in (c) of FIG. 11, the current block is divided into sub-blocks in both the vertical direction and the horizontal direction. A gray sub-block in (c) of FIG. 11 is the first sub-block, and a white sub-block is the second sub-block.

As shown in (d) of FIG. 11, the current block is divided into sub-blocks in both the vertical direction and the horizontal direction. A gray sub-block in (d) of FIG. 11 is the first sub-block, and a white sub-block is the second sub-block.

The following describes the embodiments of this application in more detail with reference to specific examples. It should be noted that the following examples are merely intended to help a person skilled in the art understand the embodiments of this application, and are not intended to limit the embodiments of this application to a specific value or a specific scenario that is exemplified. A person skilled in the art may clearly perform various equivalent modifications or changes according to the following examples. Such modifications or changes also fall within the scope of the embodiments of this application.

In a first step, a high-level syntax element in the bitstream is parsed. The high-level syntax element is used to determine whether the decoding method provided in this embodiment of this application is enabled. The high-level syntax element may be, for example, sequence-level information, frame-level information, slice-level information, tile-level information, or coding tree unit-level information. Table 1 is a decoding table of a sequence-level syntax element according to an embodiment of this application. The sps_fsbt_enabled_flag is binary identification information. When the identification information does not exist in the bitstream, the value of the flag is 0 by default. When the value of the flag is 1, it indicates that the current bitstream allows to use the filtering technology described above. When the value of the flag is 0, it indicates that the filtering technology described above is not allowed to be used.

**Table 1**

| | |
|---|---|
| seq_parameter_set_rbsp () { | Descriptor |
| ...//Other sequence-level syntax element | |
| sps_fsbt_enabled_flag//sequence-level syntax identification of the technology | u(1) |
| ...//other sequence-level syntax element | |
| } | |

Table 2 is a decoding table of a block-level syntax element according to an embodiment of this application. The cu_fsbt_flag is a binary identification information. When the identification information does not exist in the bitstream, the value of the flag is 0 by default. When the value of the flag is 1, it indicates that the current bitstream allows to use the filtering technology described above. When the value of the flag is 0, it indicates that the filtering technology described above is not allowed to be used. Table 2 further includes binary identification information cu_sbt_flag. When the identification information does not exist in the bitstream, the value of the flag is 0 by default. When the value of the flag is 1, it indicates that the current bitstream allows to use the SBT technology. When the value of the flag is 0, it indicates that the SBT technology is not allowed to be used. In addition, table 2 further includes identification information indicating a location, a dividing ratio, and a dividing direction of the sub-block.

**Table 2**

| | |
|---|---|
| coding_unit (x0, y0, cbWidth, cbHeight, cqtDepth, treeType, modeType) { | Descriptor |
| ...//coding unit-level syntax element | |
| if (CuPredMode[chType][x0][y0]!= MODE_INTRA &&!pred_mode_plt_flag && | |
| general_merge_flag[x0][y0] = = 0) | |
| cu_coded_flag//indicates whether the current coding unit contains residual | ae(v) |
| if (cu_coded_flag) { | |
| if (CuPredMode[chType][x0][y0] = = MODE_INTER && sps_sbt_enabled_flag && | |
| !ciip_flag[x0][y0] && cbWidth <= MaxTbSizeY && cbHeight <= MaxTbSizeY) { | |
| allowSbtVerH = cbWidth >= 8 | |
| allowSbtVerQ = cbWidth >= 16 | |
| allowSbtHorH = cbHeight >= 8 | |
| allowSbtHorQ = cbHeight >= 16 | |
| if (allowSbtVerH \| \| allowSbtHorH) | |
| cu_sbt_flag//indicates that the current coding unit uses SBT | ae(v) |
| if (cu_sbt_flag) { | |
| if ((allowSbtVerH \| \| allowSbtHorH) && (allowSbtVerQ \| \| allowSbtHorQ)) | |
| cu_sbt_quad_flag//indicates whether the SBT division ratio is 1: 3; if not, the SBT division is ratio is 1: 1. | ae(v) |
| if ((cu_sbt_quad_flag && allowSbtVerQ && allowSbtHorQ) \|\| | |
| (!Cu_sbt_quad_flag && allowSbtVerH && allowSbtHorH)) | |
| cu_sbt_horizontal_flag//indicates Whether the SBT sub-block dividing direction is horizontal | ae(v) |
| cu_sbt_pos_flag//indicates that which one has residual and which one does not have residual in two sub-blocks divided based on SBT | ae(v) |
| } | |
| } | |
| ...//coding unit-level syntax element | |
| } | |
| ...//coding unit-level syntax element | |
| if (cu_sbt_flag && sps_fsbt_enabled_flag) { | |
| cu_fsbt_flag//indicates whether the filtering technology is used for the current coding unit divided by using the SBT | ae(v) |
| } | |
| ...//coding unit-level syntax element | |
| } | |

In a second step, if it is determined that the SBT is used in the bitstream parsing and the cu_fsbt_flag is 1, the filter is obtained and the sub-block that does not have the residual information is filtered.

The filter may be, for example, a 5-tap filter in FIG. 5, and the first filter may be, for example, another filter in FIG. 6.

In a third step, the current block is divided into two sub-blocks based on the SBT technology. Reconstruction blocks of two sub-blocks are determined in the decoding process. As shown in FIG. 7, the reconstruction block of the first sub-block includes residual information, and the initial reconstruction block of the second sub-block does not include residual information. For example, a prediction block of the second sub-block may be used as the initial reconstruction block of the second sub-block, or a target value obtained after the luma mapping and the chroma scaling is performed on the prediction block of the second sub-block is used as the initial reconstruction block of the second sub-block.

Padding is performed in an area around the reconstruction block. For example, the 5-tap filter in this solution needs to perform padding in a manner shown in FIG. 7. That is, one row or one column of samples are padded in each of the upper side, the left side and the right side of the current block. The padding information may be, for example, reconstruction information of an edge location of the sub-block.

In a fourth step, a filter slides in an area of the first sub-block, prediction information or the foregoing target value is used as input of the filter, and reconstruction information is used as output of the filter, to construct an autocorrelation coefficient matrix and a cross-correlation coefficient vector. For details, one may refer to formula (5). R represents a sub-block area that includes a residual coefficient, and p_0 to p_(N-1) respectively represent five locations on the filter. For example, t[r+p_0] represents input information of the (p_0)-th filter at the r-th sample location (that is, prediction information or the target value), and t[r]' represents the reconstruction information of the r-th sample location. In this example, the filter is a 5-tap filter, so N=5. $\left[\begin{matrix}{\sum }_{\left‖R\right‖} \left.t\left[r+{p}_{0}\right]t\left[r+{p}_{0}\right]\right) & ⋯ & {\sum }_{\left‖R\right‖} t \left[r+{p}_{N - 1}\right] t \left[r+{p}_{0}\right] \\ ⋮ & ⋱ & ⋮ \\ {\sum }_{\left‖R\right‖} \left.t\left[r+{p}_{0}\right]t\left[r+{p}_{N - 1}\right]\right) & ⋯ & {\sum }_{\left‖R\right‖} t \left[r+{p}_{N - 1}\right] t \left[r+{p}_{N - 1}\right]\end{matrix}\right] \left[\begin{matrix}{c}_{0} \\ ⋮ \\ {c}_{N - 1}\end{matrix}\right] = \left[\begin{matrix}{\sum }_{\left‖R\right‖} t \left[r\right] ′ t \left[r+{p}_{0}\right] \\ ⋮ \\ {\sum }_{\left‖R\right‖} t \left[r\right] ′ t \left[r+{p}_{N - 1}\right]\end{matrix}\right]$ (5)

Five filtering coefficients of the filter, that is, c_0 to c_4, are obtained by solving the foregoing linear equation.

In a fifth step, prediction information (a target value) of the second sub-block is filtered according to the obtained filter and filtering coefficient. The filtering process includes: sliding in an area in which the second sub-block is located, and acquiring an output of the filter at each position by using predict information (a target value) as filter input. Correspondingly, the output of the filter is used as the target reconstruction information of the second sub-block. For example, the foregoing filtering equation may be shown in formula (6). In which, t_{*r*+*pn*} represents the *pₙ*-th piece of prediction information (the target value) of the second sub-block at the r-th location, *cₙ* represents the obtained n-th filter coefficient, and *oᵣ* represents a filtered value at the r-th position. ${o}_{r} = {\sum }_{n = 0}^{4} \left({t}_{r + {p}_{n}}\times {c}_{n}\right)$ (6)

Generally, a filtered value may be limited to a certain range. For example, at sample value precision of 10bit, in this solution, each filter output value *oᵣ* may be limited to a range of 0 to 2¹⁰⁻¹.

The encoding and decoding method provided in the embodiments of this application is implemented in related reference software to obtain a group of experimental data. For a specific parameter result of the experimental data, one may refer to Table 3. It may be learned from Table 3 that encoding effects of some videos, such as RitualDance, Cactus, BasketballDrill, PartyScene, are improved.

**Table 3**

| Resolution | Test sequence name | Y | U | V |
|---|---|---|---|---|
| Class B-1080p | MarketPlace | 0.06% | -0.26% | -0.24% |
| | RitualDance | -0.01% | -0.07% | 0.05% |
| | Cactus | -0.03% | 0.05% | 0.22% |
| Class C-480p | BasketballDrill | -0.02% | -0.15% | 0.19% |
| | BQMall | 0.01% | 0.02% | 0.07% |
| | PartyScene | -0.03% | 0.06% | -0.10% |

It should be noted that, in addition to performing the steps of the decoder to complete reconstruction and filtering, the encoder may decide whether to use the encoding and decoding method provided in embodiments of this application. For example, the encoder may compare a rate distortion cost of the encoding and decoding method provided in embodiments of this application with a cost of another mode, to select a mode with a minimum cost.

The foregoing describes the method embodiments of this application in detail with reference to FIG. 1 to FIG. 12. The following describes the apparatus embodiments of this application in detail with reference to FIG. 13 to FIG. 16. It should be understood that the description of the method embodiment corresponds to the description of the apparatus embodiment. Therefore, for a part that is not described in detail, reference may be made to the foregoing method embodiments.

FIG. 13 is a schematic structural diagram of a decoder according to an embodiment of this application. As shown in FIG. 13, the decoder 1300 includes a first determining unit 1310, a second determining unit 1320, a third determining unit 1330, and a fourth determining unit 1340. The first determining unit 1310 is configured to parse a bitstream to determine a first sub-block and a second sub-block in a current block. The second determining unit 1320 is configured to determine reconstruction information of the first sub-block according to prediction information and residual information of the first sub-block. The third determining unit 1330 is configured to determine initial reconstruction information of the second sub-block according to prediction information of the second sub-block, where the initial reconstruction information of the second sub-block does not include residual information. The fourth determining unit 1340 is configured to determine target reconstruction information of the second sub-block according to the reconstruction information of the first sub-block and the initial reconstruction information of the second sub-block.

In some implementations, the fourth determining unit 1340 is configured to: determine a first filter according to the prediction information of the first sub-block and the reconstruction information of the first sub-block, where the first filter is used to indicate an association relationship between the prediction information of the first sub-block and the reconstruction information of the first sub-block; and perform filtering processing on the initial reconstruction information of the second sub-block according to the first filter, to determine the target reconstruction information of the second sub-block.

In some implementations, the fourth determining unit 1340 is configured to: determine an autocorrelation coefficient matrix and a cross-correlation coefficient matrix according to the prediction information of the first sub-block and the reconstruction information of the first sub-block; and determine a filtering parameter of the first filter according to the autocorrelation coefficient matrix and the cross-correlation coefficient matrix.

In some implementations, the first filter is determined based on reconstruction information in the first sub-block and sample information of a padding area around the first sub-block; or the first filter is determined based on only reconstruction information in the first sub-block.

In some implementations, the decoder 1300 further includes a fifth determining unit, configured to parse the bitstream to determine first identification information, where the first identification information is used to indicate whether to perform filtering processing on the initial reconstruction information of the second sub-block.

In some implementations, the decoder 1300 further includes a sixth determining unit, configured to parse the bitstream to determine second identification information, where the second identification information is used to indicate whether to perform a step of determining the target reconstruction information of the second sub-block.

In some implementations, the second identification information is general constraint information, sequence-level information, frame-level information, slice-level information, tile-level information, or coding tree unit-level information.

In some implementations, the decoder 1300 further includes a seventh determining unit, configured to parse the bitstream to determine third identification information, where the third identification information is used to indicate whether the current block uses a sub-block transform mode. The first determining unit 1310 is configured to: if the third identification information indicates that the current block uses the sub-block transform mode, determine the first sub-block and the second sub-block.

In some implementations, the decoder 1300 further includes an eighth determining unit, configured to: if the third identification information indicates that the current block does not use the sub-block transform mode, determine the reconstruction information of the current block according to the residual information of the current block.

In some implementations, the current block is an inter prediction block or an intra prediction block based on the intra block copy mode.

In some implementations, the first determining unit 1310 is configured to: parse the bitstream to determine first information, where the first information is used to determine a location of the first sub-block and the second sub-block in the current block.

In some implementations, the first information is used to indicate a division ratio and/or a division direction of the current block.

In some implementations, the initial reconstruction information of the second sub-block is prediction information of the second sub-block, or target information obtained after luma mapping and chroma scaling are performed on the prediction information of the second sub-block.

In some implementations, the decoder 1300 further includes: a ninth determining unit, configured to parse the bitstream to determine a quantization coefficient; a tenth determining unit, configured to perform inverse quantization on the quantization coefficient to determine a transform coefficient; and an eleventh determining unit, configured to perform inverse transformation on the transform coefficient to determine residual information of the first sub-block.

It may be understood that in embodiments of this application, the term "unit" may be a partial circuit, a partial processor, a partial program or software, or the like. Certainly, the term "unit" may be a module or may be in a non-modular form. In addition, components in embodiments may be integrated into one processing unit, or each of the units may exist alone physically, or two or more units may be integrated into one unit. The foregoing integrated unit may be implemented in a form of hardware, or may be implemented in a form of a software functional module.

When the integrated unit is implemented in a form of a software functional module and not sold or used as an independent product, the integrated unit may be stored in a computer-readable storage medium. Based on such an understanding, the technical solutions of embodiments essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to execute all or some of the steps of the methods described in the embodiments. The foregoing storage medium includes various media that may store a program code, such as a USB flash drive, a removable hard disk, a read-only memory (Read Only Memory, ROM), a random access memory (Random Access Memory, RAM), a magnetic disk, or an optical disc.

Therefore, an embodiment of this application provides a computer readable storage medium, applied to a decoder 1300. The computer readable storage medium stores a computer program, and the computer program is executed by a processor to implement the foregoing decoding method.

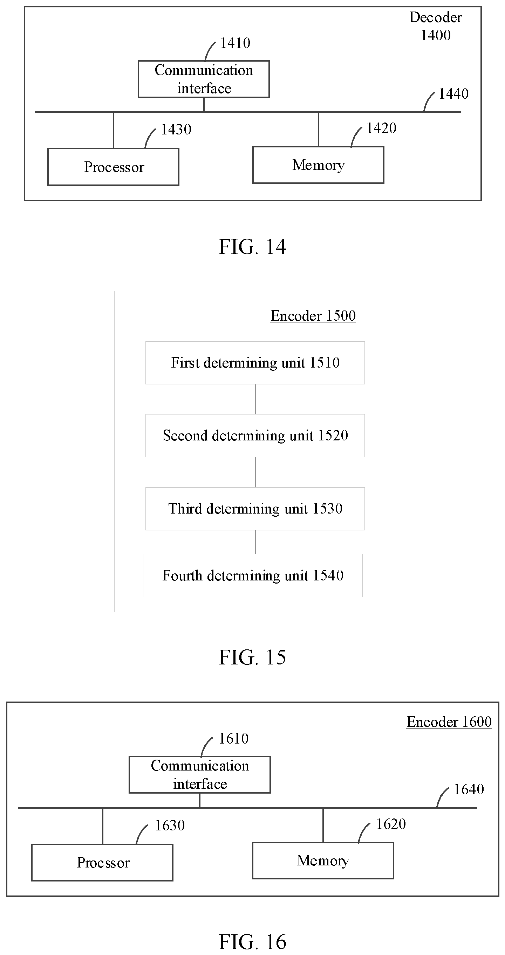

Based on the foregoing composition of the decoder 1300 and a computer readable storage medium, reference is made to FIG. 14, which shows a schematic structural diagram of specific hardware of the decoder according to an embodiment of this application. As shown in FIG. 14, the decoder 1400 may include a communications interface 1410, a memory 1420, and a processor 1430. Each component is coupled together by using a bus system 1440. It may be understood that the bus system 1440 is configured to implement connection and communication between these components. In addition to a data bus, the bus system 1440 further includes a power bus, a control bus, and a status signal bus. However, for clear description, various buses are marked as the bus system 1440 in FIG. 14.

The communications interface 1410 is configured to receive and transmit a signal in a process of transmitting and receiving information between the communications interface 1410 and another external network element.

The memory 1420 is configured to store a computer program.

The processor 1430 is configured to: when running the computer program, execute the following operations of:
parsing a bitstream to determine a first sub-block and a second sub-block in a current block;
determine reconstruction information of the first sub-block according to prediction information and residual information of the first sub-block;
determine initial reconstruction information of the second sub-block according to prediction information of the second sub-block, where the initial reconstruction information of the second sub-block does not include residual information; and
determining target reconstruction information of the second sub-block according to the reconstruction information of the first sub-block and the initial reconstruction information of the second sub-block.

It may be understood that the memory 1420 in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example rather than limitative description, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DRRAM). The memory 1420 of the system and method described in this application is intended to include but is not limited to these and any other suitable type of memory.

The processor 1430 may be an integrated circuit chip, and has a signal processing capability. In an implementation process, the steps of the foregoing methods may be completed by using an integrated logic circuit of hardware in the processor 1430 or an instruction in a form of software. The processor 1430 may be a general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor can implement or execute the methods, steps and logical block diagrams disclosed in embodiments of this application. The general-purpose processor may be a microprocessor, or the processor may be any conventional processor or the like. The steps of the methods disclosed with reference to embodiments of this application may be directly executed by a hardware decoding processor, or executed by a combination of hardware and software modules in the decoding processor. The software module may be located in a mature storage medium in the art, for example, a random access memory, a flash memory, a read-only memory, a programmable read-only memory, an erasable programmable memory, or a register. The storage medium is located in the memory 1420. The processor 1430 reads information in the memory 1420 and completes the steps of the foregoing methods with reference to hardware of the processor 1430.

It may be understood that these embodiments described in this application may be implemented by hardware, software, firmware, middleware, microcode, or a combination thereof. For hardware implementation, the processing unit may be implemented in one or more application-specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units configured to execute the functions described in this application, or a combination thereof. For software implementation, the technologies described in this application can be implemented by modules (such as processes and functions) that execute the functions described in this application. Software code may be stored in a memory and executed by a processor. The memory may be implemented in the processor or outside the processor.

Optionally, in another embodiment, the processor 1430 is further configured to execute the decoding method in the foregoing embodiments when running the computer program.

FIG. 15 is a schematic structural diagram of an encoder according to an embodiment of this application. As shown in FIG. 15, the encoder 1500 includes a first determining unit 1510, a second determining unit 1520, a third determining unit 1530, and a fourth determining unit 1540. The first determining unit 1510 is configured to determine a first sub-block and a second sub-block in a current block. The second determining unit 1520 is configured to determine reconstruction information of the first sub-block according to prediction information and residual information of the first sub-block. The third determining unit 1530 is configured to determine initial reconstruction information of the second sub-block according to the prediction information of the second sub-block, where the initial reconstruction information of the second sub-block does not include residual information. The fourth determining unit 1540 is configured to determine target reconstruction information of the second sub-block according to the reconstruction information of the first sub-block and the initial reconstruction information of the second sub-block.

In some implementations, the fourth determining unit 1540 is configured to: determine a first filter according to the prediction information of the first sub-block and the reconstruction information of the first sub-block, where the first filter is used to indicate an association relationship between the prediction information of the first sub-block and the reconstruction information of the first sub-block; and perform filtering processing on the initial reconstruction information of the second sub-block according to the first filter, to determine the target reconstruction information of the second sub-block.

In some implementations, the fourth determining unit 1540 is configured to: determine an autocorrelation coefficient matrix and a cross-correlation coefficient matrix according to the prediction information of the first sub-block and the reconstruction information of the first sub-block; and determine a filtering parameter of the first filter according to the autocorrelation coefficient matrix and the cross-correlation coefficient matrix.

In some implementations, the first filter is determined based on reconstruction information in the first sub-block and sample information of a padding area around the first sub-block; or the first filter is determined based on only reconstruction information in the first sub-block.

In some implementations, the encoder 1500 further includes a first writing unit configured to write first identification information into the bitstream, and the first identification information is used to indicate whether to perform filtering processing on the initial reconstruction information of the second sub-block.

In some implementations, the encoder 1500 further includes a second writing unit configured to write second identification information into the bitstream, and the second identification information is used to indicate whether to perform the step of determining the target reconstruction information of the second sub-block.

In some implementations, the second identification information is general constraint information, sequence-level information, frame-level information, slice-level information, tile-level information, or coding tree unit-level information.

In some implementations, the encoder 1500 further includes a third writing unit configured to write third identification information into the bitstream, where the third identification information is used to indicate whether the current block uses a sub-block transform mode.

In some implementations, the current block is an inter prediction block or an intra prediction block based on an intra block copy mode.

In some implementations, the encoder 1500 further includes a fourth writing unit configured to write first information into the bitstream, where the first information is used to determine a location of the first sub-block and the second sub-block in the current block.

In some implementations, the first information is used to indicate a division ratio and/or a division direction of the current block.

In some implementations, the initial reconstruction information of the second sub-block is prediction information of the second sub-block, or target information obtained after luma mapping and chroma scaling are performed on the prediction information of the second sub-block.

In some implementations, the encoder 1500 further includes: a quantization unit, configured to quantize a transform coefficient determined based on the residual information of the first sub-block to determine a quantization coefficient; and an encoding unit, configured to encode the quantization coefficient.

It may be understood that in embodiments of this application, the term "unit" may be a partial circuit, a partial processor, a partial program or software, or the like. Certainly, the term "unit" may be a module or may be in a non-modular form. In addition, components in the embodiments may be integrated into one processing unit, or each of the units may exist alone physically, or two or more units may be integrated into one unit. The foregoing integrated unit may be implemented in a form of hardware, or may be implemented in a form of a software functional module.

When the integrated unit is implemented in a form of a software functional module and not sold or used as an independent product, the integrated unit may be stored in a computer-readable storage medium. Based on such an understanding, the technical solutions of embodiments essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to execute all or some of the steps of the methods described in the embodiments. The foregoing storage medium includes various media that may store a program code, such as a USB flash drive, a removable hard disk, a read-only memory (Read Only Memory, ROM), a random access memory (Random Access Memory, RAM), a magnetic disk, or an optical disc.

Therefore, an embodiment of this application provides a computer readable storage medium, which is applied to an encoder 1500. The computer readable storage medium stores a computer program. When being executed by a processor, the computer program implements the encoding method in the foregoing embodiments.

Based on a composition of the foregoing encoder 1500 and a computer readable storage medium, reference is made to FIG. 16, which shows a schematic structural diagram of specific hardware of an encoder according to an embodiment of this application. As shown in FIG. 16, the encoder 1600 may include a communications interface 1610, a memory 1620, and a processor 1630. Each component is coupled together by using a bus system 1640. It may be understood that the bus system 1640 is configured to implement connection and communication between these components. In addition to a data bus, the bus system 1640 further includes a power bus, a control bus, and a status signal bus. However, for clear description, various buses are marked as the bus system 1640 in FIG. 16.

The communications interface 1610 is configured to receive and transmit a signal in a process of transmitting and receiving information between the communications interface 1610 and another external network element.

The memory 1620 is configured to store a computer program.

The processor 1630 is configured to: when running the computer program, execute the following operations of:
determining a first sub-block and a second sub-block in a current block;
determining reconstruction information of the first sub-block according to prediction information and residual information of the first sub-block;
determining initial reconstruction information of the second sub-block according to prediction information of the second sub-block, where the initial reconstruction information of the second sub-block does not include residual information; and
determining target reconstruction information of the second sub-block according to the reconstruction information of the first sub-block and the initial reconstruction information of the second sub-block.

It may be understood that the memory 1620 in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example rather than limitative description, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DRRAM). The memory 1620 of the system and method described in this application is intended to include but is not limited to these and any other suitable type of memory.

The processor 1630 may be an integrated circuit chip, and has a signal processing capability. In an implementation process, the steps in the foregoing methods may be completed by using an integrated logic circuit of hardware in the processor 1630 or an instruction in a form of software. The foregoing processor 1630 may be a general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor may implement or execute the methods, steps and logical block diagrams disclosed in embodiments of this application. The general-purpose processor may be a microprocessor, or the processor may be any conventional processor or the like. The steps of the methods disclosed with reference to embodiments of this application may be directly executed by a hardware decoding processor, or executed by a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1620. The processor 1630 reads information in the memory 1620 and completes the steps of the foregoing methods with reference to hardware of the processor 1630.

It may be understood that these embodiments described in this application may be implemented by hardware, software, firmware, middleware, microcode, or a combination thereof. For hardware implementation, the processing unit may be implemented in one or more application-specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units configured to execute the functions described in this application, or a combination thereof. For software implementation, the technologies described in this application may be implemented by modules (such as processes and functions) that execute the functions described in this application. Software code may be stored in a memory and executed by a processor. The memory may be implemented in the processor or outside the processor.

Optionally, in another embodiment, the processor 1630 is further configured to execute the encoding method in the foregoing embodiment when running the computer program.

It should be noted that, in this application, the terms "include", "comprise", or any other variant thereof are intended to cover a non-exclusive inclusion, so that a process, a method, an article, or an apparatus that includes a list of elements not only includes those elements but also includes other elements which are not expressly listed, or further includes elements inherent to such process, method, article, or apparatus. In the absence of more restrictions, an element defined by the statement "includes a..." does not rule out having another same element in a process, method, article, or apparatus that includes the element.

The foregoing sequence numbers of embodiments of this application are merely for description, and do not represent advantages or disadvantages of the embodiments.

The disclosed methods in the several method embodiments of this application may be randomly combined with each other in the case of no conflicts, to obtain new method embodiments.

The disclosed features in the several product embodiments of this application may be randomly combined with each other in the case of no conflicts, to obtain new product embodiments.

The disclosed features in the several method or device embodiments of this application may be randomly combined with each other in the case of no conflicts, to obtain new method embodiments or device embodiments.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A decoding method, applied to a decoder, comprising:
parsing a bitstream to determine a first sub-block and a second sub-block in a current block;
determining reconstruction information of the first sub-block according to prediction information and residual information of the first sub-block;
determining initial reconstruction information of the second sub-block according to prediction information of the second sub-block, wherein the initial reconstruction information of the second sub-block does not comprise residual information; and
determining target reconstruction information of the second sub-block according to the reconstruction information of the first sub-block and the initial reconstruction information of the second sub-block.

2. The method according to claim 1, wherein the determining target reconstruction information of the second sub-block according to the reconstruction information of the first sub-block and the initial reconstruction information of the second sub-block comprises:
determining a first filter according to the prediction information of the first sub-block and the reconstruction information of the first sub-block, wherein the first filter is used to indicate an association relationship between the prediction information of the first sub-block and the reconstruction information of the first sub-block; and
performing filtering processing on the initial reconstruction information of the second sub-block according to the first filter, to determine the target reconstruction information of the second sub-block.

3. The method according to claim 2, wherein the determining a first filter according to the prediction information of the first sub-block and the reconstruction information of the first sub-block comprises:
determining an autocorrelation coefficient matrix and a cross-correlation coefficient matrix according to the prediction information of the first sub-block and the reconstruction information of the first sub-block; and
determining a filtering parameter of the first filter according to the autocorrelation coefficient matrix and the cross-correlation coefficient matrix.

4. The method according to claim 2 or 3, wherein
the first filter is determined based on reconstruction information in the first sub-block and sample information of a padding area around the first sub-block; or
the first filter is determined based on only reconstruction information in the first sub-block.

5. The method according to any one of claims 2 to 4, further comprising:
parsing the bitstream to determine first identification information, wherein the first identification information is used to indicate whether to perform filtering processing on the initial reconstruction information of the second sub-block.

6. The method according to any one of claims 1 to 5, further comprising:
parsing the bitstream to determine second identification information, wherein the second identification information is used to indicate whether to perform a step of determining the target reconstruction information of the second sub-block.

7. The method according to claim 6, wherein the second identification information is general constraint information, sequence-level information, frame-level information, slice-level information, tile-level information, or coding tree unit-level information.

8. The method according to any one of claims 1 to 7, further comprising:
parsing the bitstream to determine third identification information, wherein the third identification information is used to indicate whether the current block uses a sub-block transform mode;
wherein the determining a first sub-block and a second sub-block in a current block comprises:
if the third identification information indicates that the current block uses the sub-block transform mode, determining the first sub-block and the second sub-block.

9. The method according to claim 8, further comprising:
if the third identification information indicates that the current block does not use the sub-block transform mode, determining reconstruction information of the current block according to residual information of the current block.

10. The method according to any one of claims 1 to 9, wherein the current block is an inter prediction block or an intra prediction block based on an intra block copy mode.

11. The method according to any one of claims 1 to 10, wherein the parsing a bitstream to determine a first sub-block and a second sub-block in a current block comprises:
parsing the bitstream to determine first information, wherein the first information is used to determine locations of the first sub-block and the second sub-block in the current block.

12. The method according to claim 11, wherein the first information is used to indicate a division ratio and/or a division direction of the current block.

13. The method according to any one of claims 1 to 12, wherein the initial reconstruction information of the second sub-block is prediction information of the second sub-block, or target information obtained after luma mapping and chroma scaling are performed on the prediction information of the second sub-block.

14. The method according to any one of claims 1 to 13, further comprising:
parsing the bitstream to determine a quantization coefficient;
performing inverse quantization on the quantization coefficient to determine a transform coefficient; and
performing inverse transformation on the transform coefficient to determine the residual information of the first sub-block.

15. An encoding method, applied to an encoder, comprising:
determining a first sub-block and a second sub-block in a current block;
determining reconstruction information of the first sub-block according to prediction information and residual information of the first sub-block;
determining initial reconstruction information of the second sub-block according to prediction information of the second sub-block, wherein the initial reconstruction information of the second sub-block does not comprise residual information; and
determining target reconstruction information of the second sub-block according to the reconstruction information of the first sub-block and the initial reconstruction information of the second sub-block.

16. The method according to claim 15, wherein the determining target reconstruction information of the second sub-block according to the reconstruction information of the first sub-block and the initial reconstruction information of the second sub-block comprises:
determining a first filter according to the prediction information of the first sub-block and the reconstruction information of the first sub-block, wherein the first filter is used to indicate an association relationship between the prediction information of the first sub-block and the reconstruction information of the first sub-block; and
performing filtering processing on the initial reconstruction information of the second sub-block according to the first filter, to determine the target reconstruction information of the second sub-block.

17. The method according to claim 16, wherein the determining a first filter according to the prediction information of the first sub-block and the reconstruction information of the first sub-block comprises:
determining an autocorrelation coefficient matrix and a cross-correlation coefficient matrix according to the prediction information of the first sub-block and the reconstruction information of the first sub-block; and
determining a filtering parameter of the first filter according to the autocorrelation coefficient matrix and the cross-correlation coefficient matrix.

18. The method according to claim 16 or 17, wherein
the first filter is determined based on reconstruction information in the first sub-block and sample information of a padding area around the first sub-block; or
the first filter is determined based on only reconstruction information in the first sub-block.

19. The method according to any one of claims 16 to 18, further comprising:
writing first identification information into a bitstream, wherein the first identification information is used to indicate whether to perform filtering processing on the initial reconstruction information of the second sub-block.

20. The method according to any one of claims 15 to 19, further comprising:
writing second identification information into the bitstream, wherein the second identification information is used to indicate whether to perform a step of determining the target reconstruction information of the second sub-block.

21. The method according to claim 20, wherein the second identification information is general constraint information, sequence-level information, frame-level information, slice-level information, tile-level information, or coding tree unit-level information.

22. The method according to any one of claims 15 to 21, further comprising:
writing third identification information into a bitstream, where the third identification information is used to indicate whether the current block uses a sub-block transform mode.

23. The method according to any one of claims 15 to 22, wherein the current block is an inter prediction block or an intra prediction block based on an intra block copy mode.

24. The method according to any one of claims 15 to 23, further comprising:
writing first information into a bitstream, wherein the first information is used to determine locations of the first sub-block and the second sub-block in the current block.

25. The method according to claim 24, wherein the first information is used to indicate a division ratio and/or a division direction of the current block.

26. The method according to any one of claims 15 to 25, wherein the initial reconstruction information of the second sub-block is prediction information of the second sub-block, or target information obtained after luma mapping and chroma scaling are performed on the prediction information of the second sub-block.

27. The method according to any one of claims 15 to 26, further comprising:
quantizing a transform coefficient determined based on the residual information of the first sub-block, to determine a quantization coefficient; and
encoding the quantization coefficient.

28. A decoder, comprising:
a first determining unit, configured to parse a bitstream to determine a first sub-block and a second sub-block in a current block;
a second determining unit, configured to determine reconstruction information of the first sub-block according to prediction information and residual information of the first sub-block;
a third determining unit, configured to determine initial reconstruction information of the second sub-block according to prediction information of the second sub-block, wherein the initial reconstruction information of the second sub-block does not comprise residual information; and
a fourth determining unit, configured to determine target reconstruction information of the second sub-block according to the reconstruction information of the first sub-block and the initial reconstruction information of the second sub-block.

29. A decoder, comprising:
a memory, configured to store a computer program; and
a processor, configured to execute the method according to any one of claims 1 to 14 when running the computer program.

30. An encoder, comprising:
a first determining unit, configured to determine a first sub-block and a second sub-block in a current block;
a second determining unit, configured to determine reconstruction information of the first sub-block according to prediction information and residual information of the first sub-block;
a third determining unit, configured to determine initial reconstruction information of the second sub-block according to prediction information of the second sub-block, wherein the initial reconstruction information of the second sub-block does not comprise residual information; and
a fourth determining unit, configured to determine target reconstruction information of the second sub-block according to the reconstruction information of the first sub-block and the initial reconstruction information of the second sub-block.

31. An encoder, comprising:
a memory, configured to store a computer program; and
a processor, configured to execute the method according to any one of claims 15 to 27 when running the computer program.

32. A non-volatile computer readable storage medium storing a bitstream, wherein the bitstream is generated by using an encoding method of an encoder, or the bitstream is decoded by using a decoding method of a decoder, wherein the decoding method is the method according to any one of claims 1 to 14, and the encoding method is the method according to any one of claims 15 to 27.

33. A bitstream, wherein the bitstream comprises a bitstream generated by the method according to any one of claims 1 to 14, or a bitstream generated by the method according to any one of 15 to 27.
